(19) **Europäisches Patentamt** **European Patent Office** **Office européen des brevets**

(11) **EP 1 639 785 B1**

(12) **FASCICULE DE BREVET EUROPEEN**

(45) Date de publication et mention de la délivrance du brevet:
**31.08.2011   Bulletin 2011/35**

(21) Numéro de dépôt: **04766076.6**

(22) Date de dépôt: **25.06.2004**

(51) Int Cl.:
***H04L 29/06*** (2006.01)

(86) Numéro de dépôt international:
**PCT/EP2004/051238**

(87) Numéro de publication internationale:
**WO 2005/002167 (06.01.2005 Gazette 2005/01)**

(54) **PROCEDE DE GESTION DE LA REDONDANCE D'UN RESEAU DE COMMUNICATION**

VERFAHREN FÜR DIE VERWALTUNG DER REDUNDANZ EINES KOMMUNIKATIONSNETZWERKES

METHOD FOR MANAGING THE REDUNDANCY OF A COMMUNICATIONS NETWORK

(84) Etats contractants désignés:
**AT BE BG CH CY CZ DE DK EE ES FI FR GB GR HU IE IT LI LU MC NL PL PT RO SE SI SK TR**

(30) Priorité: **30.06.2003   FR 0307885**

(43) Date de publication de la demande:
**29.03.2006   Bulletin 2006/13**

(73) Titulaire: **Thales**
**92200 Neuilly Sur Seine (FR)**

(72) Inventeurs:
• **Dugas, Laurent,**
**c/o Thales Intellectual Property**
**94117 Arcueil (FR)**

• **Royer, Laurent,**
**c/o Thales Intellectual Property**
**94117 Arcueil (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-99/59078     US-B1- 6 263 371**

## Description

La présente invention concerne les réseaux de communication redondants. Elle s'applique aux réseaux partagés, appelés aussi réseaux à diffusion, et aux réseaux commutés, appelés aussi réseaux point-à-point. Elle s'applique plus particulièrement aux réseaux du type dit "ETHERNET" dont la structure générale est définie par les normes IEEE 802.3 ou ISO 8802-3, qui sont équivalentes.

Un réseau partagé comporte un canal de communication ("medium") auquel sont reliés des abonnés. Les abonnés émettent et reçoivent des messages sur le même canal de communication, les messages émis par un abonné étant reçus par tous les autres. Une caractéristique des réseaux partagés est la présence de collisions, c'est à dire de messages émis simultanément (au temps de propagation près) sur le canal de communication. Il existe des techniques permettant de détecter et de résoudre ces collisions.

Un réseau commuté comporte des commutateurs ("switch") auxquels sont reliés des abonnés. Les commutateurs permettent de relier dynamiquement un abonné (ou un groupe d'abonnés) à un autre abonné (ou un groupe d'abonnés). Les abonnés émettent et reçoivent des messages qui ne sont en principe reçus que par leurs destinataires. Il n'y a en principe (sauf dans le cas des réseaux "half-duplex") pas de collision sur un tel réseau. Cependant des données peuvent être perdues par les commutateurs du réseau en cas de saturation. Une saturation peut survenir si deux abonnés émettent des données à un débit maximum en destination d'un même abonné.

Quoiqu'il en soit, le fonctionnement d'un réseau partagé et d'un réseau commuté peut être perturbé par des pannes ou des dégradations pouvant survenir dans le temps. Afin d'éviter de perdre des données, il peut être utile de rendre ces réseaux redondants. La redondance consiste à dupliquer les éléments du réseau. On peut par exemple dupliquer la couche physique du réseau (couche 1 du modèle OSI) pour former au moins deux voies, les données étant émises sur chaque voie, c'est à dire sur chaque sous-réseau. Chaque abonné utilisant la redondance doit être relié aux deux voies. Lors de la réception, seule les données provenant d'une voie sont transmises à l'abonné. Si cette voie tombe en panne, les données de l'autre voie sont transmises.

La mise en oeuvre de la redondance nécessite de vérifier la cohérence des données entre les deux voies. Dans le cas des réseaux partagé, cette vérification peut être réalisée en émettant de façon identique sur les deux voies, et en comparant les chronogrammes des signaux sur les deux voies. Cette redondance peut donc être effectuée au niveau de la couche physique du réseau sans avoir besoin de remonter aux couches de niveau supérieur. Une telle redondance est décrite par exemple dans le document FR 2726954,

Le document US 6,263,371 B1 décrit notamment un procédé de reconstitution de flux de données reçus d'une source de contenu. Ce flux de données reconstitué est retransmis vers un consommateur de données. En particulier, le flux de données reconstitué est construit en comblant les informations manquantes dans chacun des flux de données reçus de la source de données, avec le contenu obtenus d'autres flux de données reçu eux aussi de la source de données.

Cependant, dans le cas des réseaux commutés, l'ordre des données reçues peut être différent sur les deux voies. En effet, les trames reçues de deux abonnés peuvent être entrelacées lors de la réception. En d'autres termes, le trafic en provenance de deux abonnés peut être mélangé L'entrelacement peut être différent selon les voies du réseau redondant. Par conséquent, la vérification de la cohérence des données entre deux voies ne peut pas être effectuée par une simple comparaison de chronogrammes.

La présente invention vient apporter une solution à ce problème. L'un des buts de la présente invention est de permettre de vérifier la cohérence des données sur les voies d'un réseau redondant, et ce même pour un réseau commuté.

A cet effet, l'invention a notamment pour objet un procédé de gestion de la redondance d'un réseau de communication, ledit réseau comportant au moins deux voies redondantes, lorsque l'on reçoit une trame sur une voie :

- on détermine une signature à partir de la trame,
- on recherche cette signature parmi des signatures déjà mémorisées dans une table de signatures, ledit procédé étant caractérisé en ce que :
- si cette signature est absente de la table de signatures, on transmet cette trame et on mémorise la signature dans la table de signatures.

Il peut être utile de connecter à un réseau redondant des abonnés qui n'utilisent pas la redondance. De tels abonnés ne sont reliés qu'à une seule voie du réseau redondant. Les voies d'un tel réseau sont donc non symétriques. Dans le cas des réseaux commuté, il peut en résulter un décalage temporel important entre les voies. Par conséquent, non seulement l'ordre des données reçues peut différer sur les deux voies, mais ces données peuvent aussi être reçues avec un décalage temporel important.

La présente invention présente l'avantage de pouvoir être mise en oeuvre dans de tels réseaux redondants non symétriques.

L'invention présente en outre l'avantage de fonctionner sans modifier les trames transmises. En d'autres termes, l'invention peut être mise en oeuvre au niveau de la couche liaison de données (couche 2 du modèle OSI) d'un réseau. Par conséquent, sa mise en oeuvre au niveau d'un protocole tel que Ethernet la rend compatible avec tout protocole au-dessus.

L'invention supporte le mode "full-duplex" Ethernet, la notion de priorité du trafic Ethernet, ainsi que la notion de trafic "multicast" Ethernet.

L'invention supporte les pannes multiples sur un réseau redondant. Au moins une panne peut être supportée sans perte de trafic. L'apparition d'autres pannes peut conduire à des pertes de trafic si les pannes sont situées à des emplacements tels que deux abonnés du réseau ne sont reliés sur aucune des deux voies. Dans les autres cas, l'invention permet de supporter plusieurs pannes sans perte de trafic.

D'autres caractéristiques et avantages de l'invention apparaîtront à la lecture de la description détaillée suivante présentée à titre d'illustration non limitative et faite en référence aux figures annexées, lesquelles représentent :

- la figure 1, un exemple de réseau redondant commuté ;
- la figure 2, un exemple de réseau redondant partagé ;
- la figure 3, un exemple d'interface entre un abonné et un réseau redondant ;
- la figure 4, un exemple de réalisation d'une unité relais selon l'invention
- la figure 5, un détail d'une interface Ethernet de l'unité relais ;
- la figure 6, un exemple de réalisation pratique d'une unité relais ;
- la figure 7, un exemple de trame Ethernet ;
- la figure 8, un exemple de chronogrammes reçus par une unité relais selon l'invention ;
- la figure 9, un exemple de mise en oeuvre de l'invention;
- la figure 10, un exemple de mise en mémoire des données correspondant à des trames reçues et non encore transmises vers un abonné;
- la figure 11, un exemple d'organisation des données mises en mémoire selon le procédé représenté figure 10 dans une mémoire d'une unité relais.

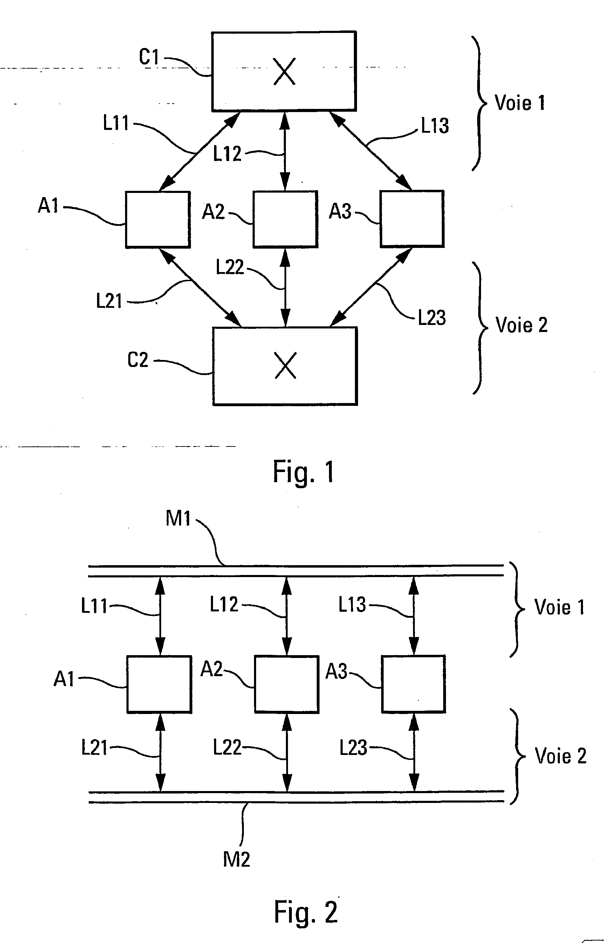

On se réfère maintenant à la figure 1 sur laquelle est représenté un exemple de réseau redondant commuté. Ce réseau comporte deux voies numérotées 1 et 2. La voie 1 comporte un commutateur C1, qui permet de relier entre eux trois abonnés A1, A2, A3 du réseau. Un abonné peut être constitué de tout système informatique, standard ou non. Les abonnés sont reliés au commutateur C1 respectivement par des liens L11, L12, L13, chaque lien reliant directement un abonné avec un port du commutateur. De la même façon, les abonnés A1, A2, A3 sont reliés respectivement par des liens L21, L22, L23 à un commutateur C2 de la voie 2. Les liens entre les abonnés et les commutateurs peuvent être par exemple des liens Ethernet. Lorsque l'abonné A1 émet des trames vers l'abonné A2, ces trames sont émises sur les liens L11 et L21. Elles sont reçues sur les liens L12 et L22. Le commutateur C1 transmet les trames de L11 vers L12 d'une part, et le commutateur C2 transmet les trames de L21 vers L22 d'autre part.

Bien entendu, un réseau commuté peut comporter plusieurs commutateurs sur chaque voie. Ces commutateurs peuvent être répartis pour former une structure en étoile, en anneau, en arbre ou un maillage régulier par exemple. Certains commutateurs peuvent être reliés uniquement à d'autres commutateurs et à aucun abonné.

On se réfère maintenant à la figure 2 sur laquelle est représenté un exemple de réseau redondant partagé. Ce réseau présente une topologie similaire à celle du réseau représenté à la figure 1, les commutateurs C1 et C2 étant remplacés respectivement par des canaux de communication M1 et M2. Lorsque l'abonné A1 émet des trames sur le réseau, ces trames sont émises sur les liens L11 et L21. Elles sont reçues par les abonnés A2 et A3 sur les liens L12 et L13 (voie 1) d'une part, et sur les liens L22 et L23 (voie 2) d'autre part.

Bien entendu, l'invention s'applique aussi à des réseaux redondants dont la topologie est un intermédiaire entre les réseaux partagés et les réseaux commutés. Par exemple, l'invention s'applique aussi aux réseaux comportant des sous-réseaux reliés entre eux par des commutateurs, ces sous-réseaux étant des réseaux partagés ou des réseaux commutés.

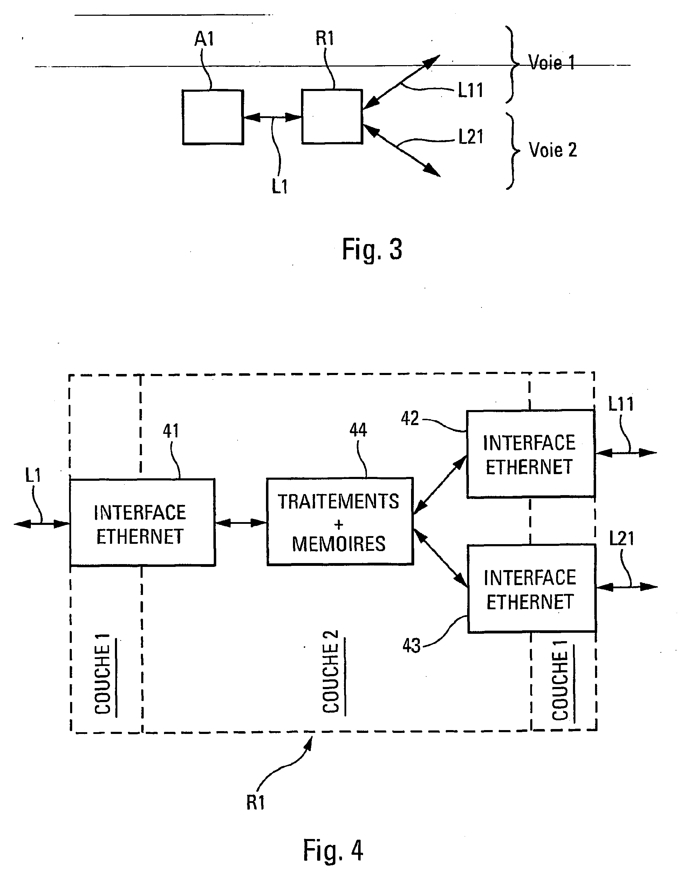

On se réfère maintenant à la figure 3 sur laquelle est représenté un exemple d'interface entre un abonné et un réseau redondant. Selon un mode de réalisation préféré de l'invention, l'abonné A1 est relié au réseau redondant par l'intermédiaire d'une station relais R1, le lien L1 entre la station relais R1 et l'abonné étant un lien de type Ethernet. L'unité relais est configurée pour rendre transparente la redondance pour l'abonné. En d'autres termes, pour un abonné tout se passe comme s'il était relié à un réseau non-redondant. L'unité relais R1 est reliée par des liens indépendants L11 et L21 à chaque voie du réseau.

Selon un autre mode de réalisation (non représenté), l'invention est mise en oeuvre au niveau de l'abonné. L'abonné est alors relié directement au réseau. Il y a alors deux liens indépendants qui permettent de relier directement l'abonné au réseau.

On se réfère maintenant à la figure 4 sur laquelle est représenté un exemple de réalisation d'une unité relais selon l'invention. L'unité relais R1 comporte trois interfaces Ethernet référencées 41, 42, 43. Ces interfaces sont des interfaces réseau faisant partie des niveaux 1 et 2 du modèle OSI. Ces trois interfaces sont reliées à un module 44 de traitements comportant des mémoires. L'interface 41 forme un port de l'unité relais, destiné à être relié à l'abonné A1. L'interface 42 forme un autre port de l'unité relais, destiné à être relié à la voie 1 du réseau redondant. L'interface 43 forme un autre port de l'unité relais, destiné à être relié à la voie 2 du réseau redondant.

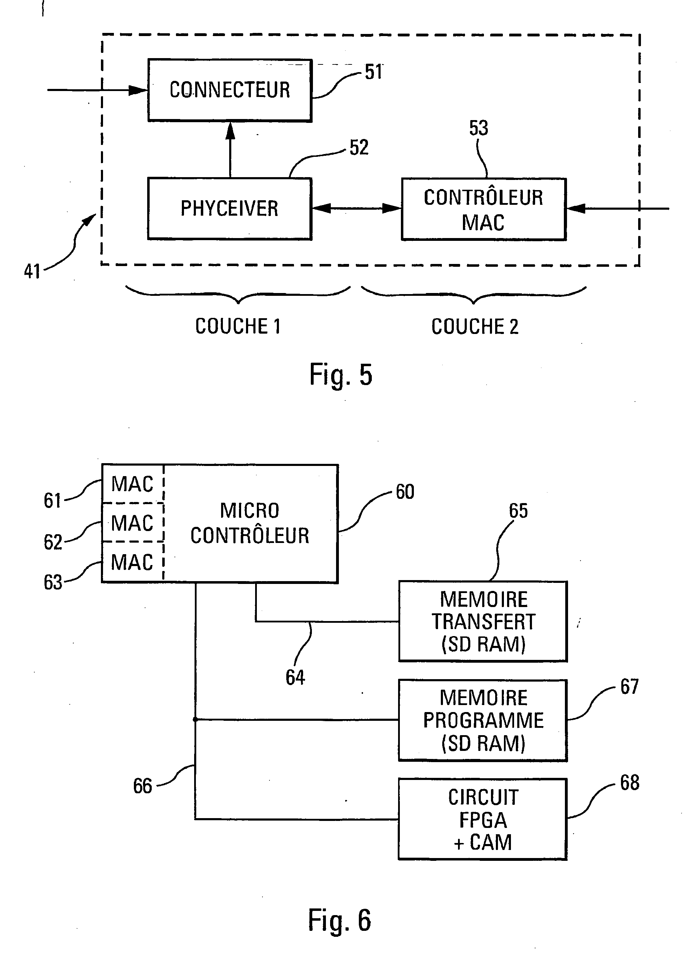

On se réfère maintenant à la figure 5 sur laquelle est représentée plus en détail une interface Ethernet de l'unité relais. L'interface comporte un connecteur 51, par exemple un connecteur électrique de type RJ45, ou encore un connecteur optique de type MTRJ, SC ou ST. Ce connecteur est destiné à être relié au support physique du réseau (câble coaxial ou fibre optique), c'est à dire à un canal de communication du réseau. Ce support physique peut être en particulier la liaison entre l'unité relais et l'abonné dans le mode de réalisation préférentiel décrit en relation avec la figure 3.

Le connecteur 51 est relié à un module Ethernet 52 appelé "Phyceiver". Ce module, utilisé dans les réseaux Ethernet à 100 Mbit/s, a une fonction équivalente aux "Transceiver" (connus encore sous le nom de transcepteur), utilisés dans les réseaux Ethernet à 10 Mbit/s. Le phyceiver assure notamment le codage et le décodage au niveau binaire. Il assure aussi la conversion des signaux électriques circulant sur le canal en des signaux électriques de format classique, utilisable par des circuits électroniques de traitement et réciproquement. Le phyceiver assure aussi la fonction de détection de lien, fonction définie dans la norme Ethernet. Ce module appartient à la couche 1 du modèle OSI.

Le phyceiver est lui-même relié à un module-Ethernet 53 appelé contrôleur MAC (acronyme pour l'expression anglo-saxonne "Media Access Control"), appelé aussi contrôleur Ethernet. Ce module appartient à la couche 2 du modèle OSI. Il permet l'accès à Ethernet, la mise en oeuvre du protocole CSMA/CD et le calcul des codes de redondances cycliques (CRC). La liaison entre le phyceiver 52 et le contrôleur 53 peut être une liaison normalisée MII (acronyme pour l'expression anlgo-saxonne "Media Independant Interface") ou GMII (acronyme pour l'expression anglo-saxonne "Gigabit Medium Independant Interface"). L'ensemble formé par le phyceiver 52, la liaison MII/GMII, et le contrôleur MAC 53 peut être intégré sur une carte adaptateur ou coupleur, désigné par l'acronyme NIC (de l'expression anglo-saxonne "Network InterFace Card").

On se réfère maintenant à la figure 6 sur laquelle est représenté un exemple de réalisation pratique d'une unité relais. Une telle unité relais présente l'avantage de permettre une exécution rapide avec un débit d'information élevé.

L'unité relais comporte un circuit microcontrôleur 60 sur lequel sont intégrés trois contrôleurs MAC compatibles avec l'Ethernet à 100 Mbit/s. Ce circuit peut être par exemple le circuit "Power Quick 2 - MPC 8260" commercialisé par la société MOTOROLA. Chaque contrôleur MAC est relié à un phyceiver (non représenté ici), lui-même relié à un connecteur (non représenté ici), pour former une interface Ethernet.

Un premier contrôleur MAC 61 est destinée à reliée à un abonné. Dans ce mode de réalisation, l'abonné n'a pas besoin de disposer d'une double connexion au réseau. Chacun des deux autres contrôleurs MAC, référencés 62 et 63, est destiné à être relié à l'une des voies du réseau redondant. Par exemple, chaque contrôleur est destiné à être relié à un commutateur différent, chaque commutateur faisant partie d'une voie différente.

L'unité relais comporte aussi une mémoire de transfert 65. La mémoire de transfert 65 peut être reliée au circuit microcontrôleur 60 par un bus de données 64 connecté à une interface mémoire du circuit 60. La mémoire 65 peut être une mémoire de type SDRAM (acronyme de l'expression anglo-saxonne "Synchronous Dynamic Random-Access Memory"). La capacité de cette mémoire peut être par exemple de l'ordre de 16 Mo. Cette mémoire permet de transférer les données entre les interfaces Ethernet, de l'abonné vers le réseau (émission) et du réseau vers l'abonné (réception). La capacité de cette mémoire est prévue en fonction de la configuration du réseau, notamment des pics de trafic.

L'unité relais comporte aussi une mémoire de programme 67. Cette mémoire 67 peut être une mémoire de type SDRAM. La capacité de cette mémoire peut être par exemple de l'ordre de 32 Mo.

De manière avantageuse, l'unité relais comporte aussi un circuit programmé, par exemple du type FPGA (acronyme de l'expression anglo-saxonne "Field Programmable Gate Array") et une mémoire associative, connue encore sous le nom de CAM (acronyme de l'expression anglo-saxonne "Content Addressable Memory"). Une mémoire associative permet de trouver une information mémorisée à partir de son contenu. L'utilisation d'une telle mémoire permet d'accélérer la recherche de signature dans le procédé selon l'invention décrit ci-dessous. L'utilisation d'un circuit programmé permet de fournir une interface de haut niveau avec la mémoire associative et d'accélérer les traitements.

Selon un autre mode de réalisation avantageux, la mémoire associative peut être connectée directement à une interface du circuit microcontrôleur 60 au lieu d'être connectée à un circuit programmé.

Bien entendu, cette invention ne se limite pas à l'exemple de mise en oeuvre décrit en relation avec la figure 6. L'invention peut aussi être mise en oeuvre de façon entièrement logicielle au niveau de chaque abonné. On remplacera dans ce cas les unités relais par des logiciels, les abonnés étant alors reliés au réseau redondant par deux interfaces Ethernet par exemple. Chaque interface Ethernet peut être réalisée avec une carte d'accès au réseau classique, connue encore sous le nom de carte adaptateur ou NIC.

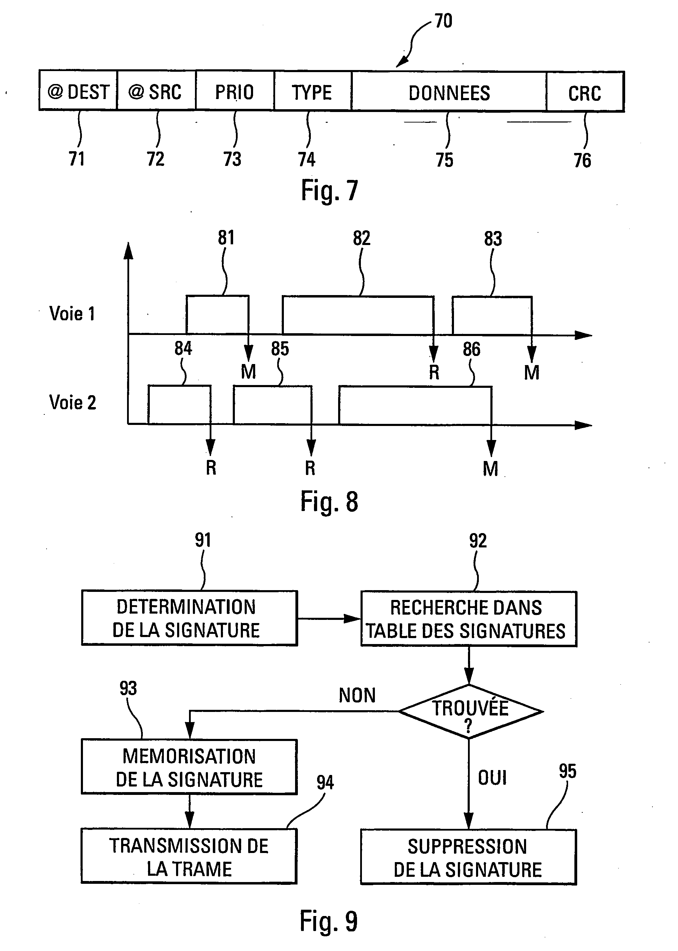

On se réfère maintenant à la figure 7 sur laquelle est représenté un exemple de trame Ethernet dont la définition est donnée dans la norme IEEE 802:3 ou ISO 8802-3.

Une trame Ethernet 70 comporte des champs 71, 72, 73, 74, 75, 76 ayant une signification déterminée. Le premier champ (non représenté) est un préambule de synchronisation qui permet aux récepteurs (couche 1 du modèle OSI) de se synchroniser au niveau binaire, sur le rythme du signal. Le préambule a une longueur de 7 octets, dont la valeur binaire est "10101010". Ce préambule est suivi par un délimiteur de trame (non représenté) qui indique le début de la trame. Ce délimiteur a une longueur de 1 octet, dont la valeur binaire est "10101011".

La trame comporte ensuite une adresse de destination 71. Elle représente l'adresse matérielle de l'interface réseau (adresse MAC) d'un abonné destinataire de la trame. Cette adresse peut aussi être une adresse de type "multicast", c'est à dire une adresse qui désigne un groupe d'abonnés. L'adresse 71 est suivie d'une adresse source 72, qui représente l'adresse d'un abonné émetteur de la trame. Les adresses 71 et 72 ont chacune une longueur-de 6 octets, c'est à dire 48 bits.

L'adresse 72 peut être suivie d'un champ de priorité 73, optionnel, d'une longueur de 4 octets. Ce champ 72 indique la priorité de la trame sur le réseau, cette priorité étant comprise entre 0 et 7. La trame comporte aussi un champ 74 d'une longueur de 2 octets, qui représente le type de la trame (Ethernet v2) ou la longueur de la trame (IEEE 802.3)

La trame comporte ensuite des données, d'une longueur de 0 à 1500 octets. Ces données peuvent être complétées le cas échéant par des octets de bourrage (principe connu sous le nom de "padding" dans la littérature anglo-saxonne), sans signification, qui permettent à la trame 70 d'avoir une longueur minimale de 64 octets. La trame comporte enfin un code de redondance cyclique ou CRC (acronyme pour l'expression anglo-saxonne "Cyclic Redundancy Check"), calculé sur les champs 71 à 75.

On se réfère maintenant à la figure 8 sur laquelle est représenté un exemple de chronogrammes reçus par une unité relais selon l'invention. Cette unité relais est reliée à un abonné ayant une adresse de destination A. Cet abonné reçoit des trames émises par des abonnés ayant des adresses sources B et C. Plus précisément, il reçoit deux trames BA1, BA2 de l'adresse source B et une trame CA1 de l'adresse source C. Ces trames sont reçues sur les deux voies 1 et 2 du réseau redondant. Par conséquent l'unité relais reçoit dans l'ordre trois trames 81, 82, 83 sur la voie 1 et trois trames 84, 85, 86 sur la voie 2. Les trames 81, 82, 83 sont respectivement les trames BA1, BA2 et CA1. Les trames 84, 85, 86 sont respectivement les trames BA1, CA1 et BA2. L'ordre des trames reçues n'est pas le même sur les deux voies.

On se réfère maintenant à la figure 9 sur laquelle est représenté un exemple de mise en oeuvre de l'invention dans l'unité relais décrite précédemment. Bien entendu, le procédé selon l'invention s'applique aussi à un abonné replié directement au réseau, le procédé étant alors mis en oeuvre de façon logicielle.

-- Lorsque l'unité relais reçoit une trame sur une voie, elle détermine 91 une signature. Cette signature est déterminée à partir des données de la trame. Elle permet d'identifier la trame avec un mot binaire de longueur réduite. Les signatures des trames reçues sont mémorisées dans une table de signatures. La table de signature occupe une zone allouée dans la mémoire associative du circuit 68 (voir figure 6).

L'unité relais recherche 92 ensuite la signature parmi celles déjà présente dans la table de signatures.

Si cette signature est absente de la table de signatures, l'unité relais transmet 94 cette trame à l'abonné destinataire, c'est à dire à l'abonné relié à l'unité relais. Elle mémorise 93 aussi cette signature dans la table de signatures.

Selon un mode de réalisation avantageux, après que l'unité relais a reçu une trame et déterminé sa signature, si la signature est présente dans la table de signatures, elle libère 95 l'entrée correspondante dans la table de signatures. Ceci permet de retirer progressivement les signatures de la table de signatures lorsqu'elles ne sont plus utiles. Par ailleurs, la trame elle-même -peut être jetée car elle a déjà été transmise à son destinataire. On évite ainsi de transmettre deux fois une même trame.

Selon-un-mode -de-réalisation avantageux, la signature comporte une clé calculée par une fonction de hachage. Une fonction de hachage est une fonction qui prend en entrée une suite de bits de longueur arbitraire, et fournit en sortie une clé de taille fixe, de telle sorte que cette clé soit représentative des bits d'entrée. Une fonction de hachage parfaite est une application injective. En pratique, une bonne fonction de hachage présente une distribution uniforme. Dans ce cas, pour une clé de N bits, la probabilité d'avoir deux clés identiques associées à des suites de bits différentes, les suites de bits étant prises dans un ensemble de M éléments, est de :

$$1 - \frac{2^N!}{\left(2^N - M\right)! \times 2^{N \times M}}$$

Cette situation est appelée une collision. Lorsque $2^N$ est grand devant M, il est possible calculer cette probabilité par la formule approchée :

$$\frac{M^2}{2^N}$$

Ce calcul de probabilité prend en compte tous les appairements (collisions) parmi les M éléments. Dans le cadre de l'invention, on s'intéresse au risque, lorsqu'on analyse une signature déterminée, si une signature identique correspondant à des données différentes a déjà été mémorisée. Ce risque peut être obtenu divisant la valeur précédente par M. On obtient donc un risque :

$$\frac{M}{2^N}$$

Pour les valeurs typiques (M=10 et N=32) ce risque est négligeable. Par conséquent, l'utilisation de ce mode de réalisation avantageux de l'invention permet de gérer la redondance de façon fiable et avec de bonnes performances de rapidité.

On se réfère à nouveau à la figure 8. La fonction de hachage est appliquée à des données de la trame. On peut appliquer la fonction de hachage à l'ensemble de la trame ou à une partie seulement. La fonction de hachage est appliquée de préférence au moins aux champs 72 et 75. De manière avantageuse, la fonction de hachage est appliquée à tous les champs (hors CRC), c'est-à dire aux champs 71 à 75 inclus. Selon un mode de réalisation avantageux, la clé est le code de redondance cyclique déjà présent dans les trames Ethernet, c'est à dire le champ 76. Ainsi, on évite de calculer cette clé.

Selon un mode de réalisation avantageux, la signature comporte en outre l'adresse de l'émetteur de la trame, c'est à dire l'adresse source et/ou la priorité de la trame.

Lorsque les données transmises sont des données périodiques, il peut arriver que plusieurs trames identiques soient transmises, d'une même source vers un même destinataire. Les signatures de ces trames sont donc identiques. Il peut y avoir une confusion entre deux trames identiques. Afin d'éviter une telle confusion, on peut numéroter les trames reçues. Cette numérotation peut être mémorisée en association avec-les signatures.

La numérotation utilise une propriété des réseaux Ethernet, selon laquelle les trames en provenance d'une même adresse source et ayant une même priorité sont reçues dans l'ordre dans lequel elles ont été émises. Selon un mode de réalisation avantageux, on mémorise en association avec chaque signature un numéro d'ordre. Les numéros d'ordres associés aux trames ayant la même adresse source, la même priorité et reçues sur une même voie forment une séquence ordonnée en fonction de l'ordre de réception desdites trames.

Par exemple, dans chaque unité relais selon l'invention on utilise un compteur par adresse source, par priorité et par voie. A chaque fois qu'une trame est reçue de la même adresse source, avec la même priorité et sur ta même voie est reçue, l'unité relais incrémente le compteur correspondant.

Ainsi, lorsque l'unité relais reçoit une trame sur une voie, elle détermine non seulement la signature de cette trame, mais aussi son numéro d'ordre. Ce numéro d'ordre est utilisé lorsqu'on recherche cette signature parmi les signatures déjà mémorisées dans la table de signatures. En effet, on recherche une signature-à laquelle le même numéro d'ordre est associé.

Selon un premier mode de réalisation avantageux, si l'unité relais ne trouve pas de signature identique avec le même numéro d'ordre associé, la trame reçue est transmise, et la signature ainsi que le numéro d'ordre sont mémorisés dans la table de signatures. Ceci permet d'éviter les confusions lorsque plusieurs trames identiques sont reçues.

L'unité relais procède de la même façon que décrit précédemment si la signature et le numéro d'ordre sont présents dans la table de signatures, à la nuance près qu'elle supprime non seulement la signature, mais aussi le numéro d'ordre, de la table de signatures.

Selon un second mode de réalisation avantageux, on peut utiliser l'information sur les numéros d'ordre pour chercher à détecter des erreurs. Cette détection d'erreur est basée sur le principe selon lequel la probabilité d'avoir plusieurs trames différentes avec la même signature est très faible (voir le calcul de probabilité ci-dessus).

Selon ce second mode de réalisation avantageux, lorsque l'unité relais reçoit une trame sur une voie, elle détermine la signature de cette trame et son numéro d'ordre. Elle recherche ensuite cette signature parmi les signatures déjà mémorisées dans la table de signature, quel que soit le numéro d'ordre.

Si l'unité relais ne trouve pas de signature identique, la trame reçue est transmise, et la signature ainsi que le numéro d'ordre sont mémorisés dans la table de signatures.

Si l'unité relais trouve une seule signature identique, mais avec un numéro d'ordre différent, alors on suppose (d'après les considérations statistiques) qu'une trame a été perdue sur l'une des voies, ce qui explique le décalage en terme de numéros d'ordre. L'unité relais procède alors comme si la trame avait la même signature et le même numéro d'ordre (trame jetée, entrée de la table de signatures libérée ...) mais elle signale une erreur.

Si l'unité relais trouve plusieurs signatures identiques, elle procède de la même façon. Toutefois, elle recherche parmi ces signatures si l'une d'elles a le même numéro d'ordre. Si aucune n'a le même numéro d'ordre, elle signale une erreur. Sinon, elle ne signale pas d'erreur.

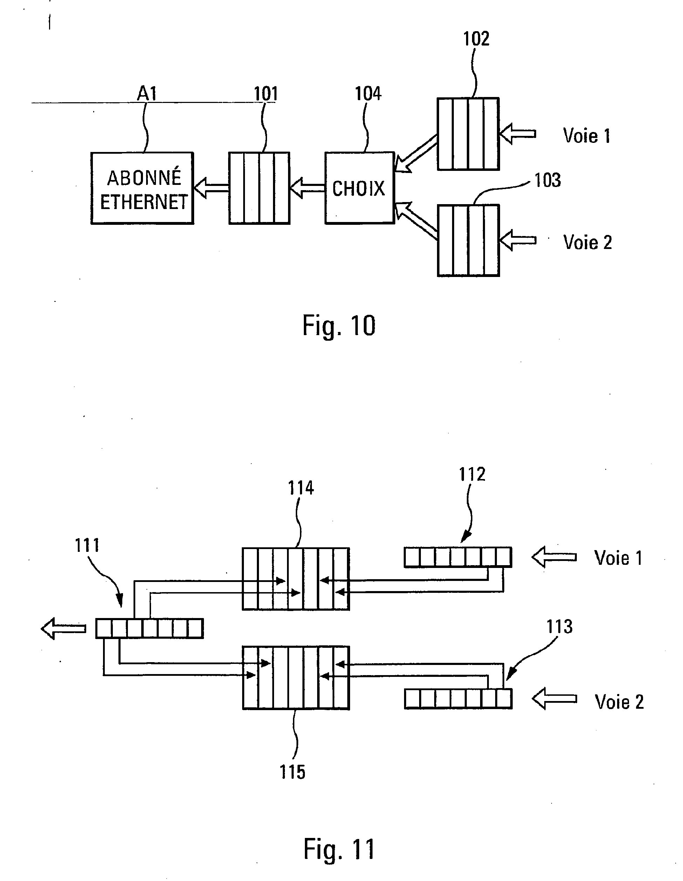

On se réfère maintenant à la figure 10 sur laquelle est représenté un exemple de mise en mémoire des données correspondant à des trames reçues et non encore transmises vers un abonné.

Selon l'invention, on attend de recevoir entièrement une trame avant de la transmettre à l'abonné. En effet, tant que la trame n'est pas entièrement reçue on ne peut pas déterminer la signature associée, laquelle est nécessaire pour mettre en oeuvre le procédé selon l'invention. Un tel fonctionnement, dans lequel on attend de recevoir entièrement une trame avant de la transmettre (fonctionnement connu sous le nom de "Store and Foward" dans la littérature anglo-saxonne), nécessite de mémoriser des trames reçues et non encore transmises. On utilise à cet effet une mémoire, telle que la mémoire 65 dans l'exemple d'unité relais représentée figure 6.

Les données reçues sur la voie 1 du réseau redondant sont mises en mémoire 102 de façon provisoire avant d'être utilisée. On utilise un procédé de mise en mémoire FIFO (acronyme de l'expression anglo-saxonne "First In First Out"), c'est à dire dans lequel les premières données mises en mémoires sont retirées de la mémoire les premières. De même, les données reçues sur la voie 2 du réseau redondant sont mises en mémoire 403. Lors de la mise en oeuvre du procédé selon l'invention 104, on choisit d'émettre les trames reçues de l'une ou l'autre voie, lesquelles ont été mises en mémoire 102, 103. Avantageusement, les trames ne sont pas directement transmises, mais mise en mémoire 101 de façon provisoire avant d'être transmises à l'abonné. On utilise aussi un procédé FIFO.

Si l'invention est mise en oeuvre de façon logicielle au niveau de l'abonné, il est n'existe pas d'interface physique entre l'abonné et une unité relais. Il n'est donc pas nécessaire de transmettre de trames d'une unité relais vers l'abonné. Toutefois, il existe une interface logicielle au sein de l'abonné. Au lieu de transmettre les trames de l'unité relais vers l'abonné, on transmet les trames au sein de l'abonné entre deux modules logiciels. Par conséquent, comme décrit précédemment, il est nécessaire de mémoriser les trames reçues et non encore transmises. On peut utiliser à cet effet une mémoire de l'abonné.

Selon un mode de réalisation avantageux, lorsqu'une trame est reçue par l'unité relais, on vérifie l'intégrité de cette trame avant de la transmettre à l'abonné. Cette vérification est réalisée de préférence avant de déterminer une signature. Cette vérification peut être réalisée en calculant le code de redondance cyclique et en le comparant à la valeur mémorisée dans la trame. Si la trame n'est pas intègre, on ne la transmet pas à l'abonné. De manière avantageuse, on signale le défaut d'intégrité de cette trame. On libère la mémoire de transfert 65 des données de cette trame.

Si la vérification d'intégrité est effectuée après le calcul de signature, on libère l'entrée correspondant à la trame détectée non intègre de la table de signature.

Comme mentionné précédemment, la capacité de la mémoire dépend de la configuration du réseau, notamment des pics de trafic. En effet, si l'unité relais reçoit des trames au débit maximum sur chaque voie, les données contenues dans les trames pouvant être différentes sur les deux voies, elle ne pourra transmettre vers l'abonné au débit maximum que la moitié des données reçues. En effet, on passe de deux liens entre l'unité relais et le réseau redondant à un lien entre l'unité relais et l'abonné. La configuration du réseau permet de déterminer la durée maximale de ces pics de trafic. Pendant cette durée, l'unité relais doit au minimum mémoriser la moitié des trames avant de pouvoir les transmettre vers l'abonné. Selon un mode de-réalisation- avantageux, on détermine la capacité de la mémoire nécessaire pour mémoriser les trames reçues et non encore transmises à l'abonné de telle sorte que toutes les trames reçues puissent être retransmises.

On se réfère maintenant à la figure 11 sur laquelle est représenté un exemple d'organisation des données mises en mémoire selon le procédé représenté figure 10 dans une mémoire d'une unité relais.

Les données correspondant aux trames reçues et non encore transmises peuvent être mémorisées dans des mémoires tampon (ou "buffers") indépendantes pour chaque voie 114 et 115. Des pointeurs peuvent adresser ces mémoires tampons. On utilise par exemple des files circulaires de pointeurs 111, 112 et 113.

Cette organisation des données permet d'optimiser la gestion de la mémoire. Toutefois les trames dans la norme Ethernet peuvent avoir une longueur variable. Par conséquent, il est nécessaire a priori d'allouer des mémoires tampon correspondant à la taille maximale des trames, c'est à dire 1522 octets.

Selon un mode de réalisation avantageux, on utilise des mémoires tampon 114 et 115 de plus petite taille, les données des trames plus longues étant mémorisées dans plusieurs mémoires tampon. On utilise de préférence des mémoires tampon correspondant à la plus petite longueur de trame, c'est à dire 64 octets. De cette manière, on optimise l'espace mémoire utilisé pour mémoriser les trames reçues et non encore transmises. Dans l'unité relais décrite en relation avec la figure 6, on utilise par exemple 40 000 mémoires tampons de 64 octets, ce qui permet de mémoriser jusqu'à 2000 trames de 1522 octets.

Avantageusement, on procède de façon analogue à l'émission, c'est à dire pour transmettre des trames de l'abonné vers le réseau redondant. Toutefois, à l'emission on ne réalise par de choix 104 car les trames sont émises à la fois sur les deux voies du réseau redondant.

## Revendications

**1.** procédé de gestion de la redondance d'un réseau de communication, ledit réseau comportant au moins deux voies redondantes, lorsque l'on reçoit une trame sur une voie :

- on détermine (91) une signature à partir de la trame,
- on recherche (92) cette signature parmi des signatures déjà mémorisées dans une table de signatures,

ledit procédé étant **caractérisé en ce que** :

- si cette signature est absente de la table de signatures, on transmet (94) cette trame et on mémorise (93) la signature dans la table de signatures.

**2.** Procédé selon la revendication 1 dans lequel si la signature est présente dans la table de signatures, on libère (95) l'entrée correspondante dans la table de signatures.

**3.** Procédé selon la revendication 1 dans lequel la signature comporte une clé, cette clé étant calculée par une fonction de hachage appliquée à des données de la trame.

**4.** Procédé selon la revendication 1 dans lequel la signature comporte l'adresse source (72) de la trame et/ou la priorité (73) de la trame.

**5.** Procédé selon la revendication 1 dans lequel lorsqu'on reçoit une trame sur une voie :

- on détermine un numéro d'ordre de la trame, les numéros d'ordres associés aux trames ayant la même adresse source, la même priorité et reçues sur une même voie formant une séquence ordonnée en fonction de l'ordre de réception desdites trames ;
- lors de l'étape (92) de recherche de la signature dans la table de signatures, on recherche une signature à laquelle le même numéro d'ordre est associé ;
- si cette signature est absente de la table de signatures, on transmet (94) cette trame et on mémorise (93) la signature et le numéro d'ordre dans la table de signatures.

**Claims**

**1.** A method of managing the redundancy of a communication network, said network comprising at least two redundant channels, when a frame is received over a channel:

- a signature is determined (91) from the frame,
- this signature is sought (92) among signatures already stored in a signature tables,

said method being **characterized in that**:

- if this signature is not in the signature table, this frame is transmitted (94) and the signature is stored (93) in the signature table.

**2.** The method as claimed in claim 1, wherein, if the signature is present in the signature table, the corresponding entry in the signature table is cleared (95).

**3.** The method as claimed in claim 1, wherein the signature includes a key, this key being computed by a hashing function applied to frame data.

**4.** The method as claimed in claim 1, wherein the signature includes the source address (72) of the frame and/or the priority (73) of the frame.

**5.** The method as claimed in claim 1, wherein, when a frame is received over a channel:

- a frame serial number is determined, the serial numbers associated with the frames having the same source address, the same priority and received over the same channel forming a sequence ordered according to the order in which said frames are received;
- in the step (92) for searching for the signature in the signature table, a signature with which the same serial number is associated is sought;
- if this signature is not in the signature table, this frame is transmitted (94) and the signature and the serial number are stored (93) in the signature table.

**Patentansprüche**

**1.** Verfahren zum Verwalten der Redundanz in einem Kommunikationsnetzwerk, wobei das Netzwerk wenigstens zwei redundante Kanäle umfasst, wobei beim Empfang eines Frame auf einem Kanal:

- eine Signatur von dem Frame ermittelt (91) wird,
- diese Signatur unter den in einer Signaturtabelle bereits gespeicherten Signaturen gesucht (92) wird,

wobei das Verfahren **dadurch gekennzeichnet ist, dass**:

- dieser Frame, wenn diese Signatur in der Signaturtabelle fehlt, übertragen (94) und die Signatur in der Signaturtabelle gespeichert (93) wird.

**2.** Verfahren nach Anspruch 1, bei dem der entsprechende Eintrag in die Signaturtabelle freigegeben (95) wird, wenn die Signatur in der Signaturtabelle existiert.

**3.** Verfahren nach Anspruch 1, bei dem die Signatur einen Schlüssel umfasst, wobei dieser Schlüssel mittels einer auf die Daten des Frame angewendeten Hash-Funktion berechnet wird.

**4.** Verfahren nach Anspruch 1, bei dem die Signatur die Quelladresse (72) des Frame und/oder die Priorität (73) des Frame umfasst.

**5.** Verfahren nach Anspruch 1, bei dem nach dem Empfang eines Frame auf einem Kanal:

- eine laufende Nummer des Frame ermittelt wird, wobei die laufenden Nummern in Verbindung mit Frames, die dieselbe Quelladresse, dieselbe Priorität haben und auf demselben Kanal empfangen wurden, eine Sequenz bilden, die nach der Reihenfolge des Empfangs der Frames geordnet ist;

- beim Schritt (92) des Suchens der Signatur in der Signaturtabelle eine Signatur gesucht wird, mit der dieselbe laufende Nummer assoziiert ist;

- wenn diese Signatur in der Signaturtabelle fehlt, dieser Frame übertragen (94) und die Signatur und die laufende Nummer in der Signaturtabelle gespeichert wird.

Fig. 1

Fig. 2

A1    R1

L11    } Voie 1

L21    } Voie 2

L1

**Fig. 3**

41    44    42

L1    INTERFACE
ETHERNET    TRAITEMENTS
+
MEMOIRES    INTERFACE
ETHERNET    L11

INTERFACE
ETHERNET    L21

43

COUCHE 1    COUCHE 2    COUCHE 1

R1

**Fig. 4**

## Fig. 5

CONNECTEUR — 51

PHYCEIVER — 52

CONTRÔLEUR MAC — 53

41

COUCHE 1    COUCHE 2

## Fig. 6

61 — MAC

62 — MAC

63 — MAC

MICRO CONTRÔLEUR — 60

65

MEMOIRE TRANSFERT (SD RAM)

64

MEMOIRE PROGRAMME (SD RAM) — 67

66

CIRCUIT FPGA + CAM — 68

EP 1 639 785 B1

| @ DEST | @ SRC | PRIO | TYPE | DONNEES | CRC |
|--------|-------|------|------|---------|-----|

71    72    73    74         75         76

## Fig. 7

Voie 1

84    85    86

Voie 2

R    R    M

## Fig. 8

| DETERMINATION DE LA SIGNATURE | → | RECHERCHE DANS TABLE DES SIGNATURES |

NON    TROUVÉE ?

| MEMORISATION DE LA SIGNATURE |

OUI

| TRANSMISSION DE LA TRAME |

| SUPPRESSION DE LA SIGNATURE |

## Fig. 9

13

Fig. 10

Fig. 11

**EP 1 639 785 B1**

## RÉFÉRENCES CITÉES DANS LA DESCRIPTION

**Documents brevets cités dans la description**

- FR 2726954

- US 6263371 B1